Europäisches Patentamt

European Patent Office

Office européen des brevets

(11) Publication number : **0 248 585 B2**

# NEW EUROPEAN PATENT SPECIFICATION

(45) Date of publication of the new patent specification : **12.05.93 Bulletin 93/19**

(51) Int. Cl.⁵ : **B32B 27/30, B32B 27/34, B32B 27/32**

(21) Application number : 87304653.6

(22) Date of filing : 26.05.87

(54) **Heat-shrinking laminate film and process to produce the same.**

(30) Priority : **23.05.86 JP 118724/86**

(43) Date of publication of application :
**09.12.87 Bulletin 87/50**

(45) Publication of the grant of the patent :
**14.02.90 Bulletin 90/07**

(45) Mention of the opposition decision :
**12.05.93 Bulletin 93/19**

(84) Designated Contracting States :
**AT CH DE ES GB IT LI NL SE**

(56) References cited :
**EP-A- 0 107 854
GB-A- 2 129 370
US-A- 3 955 040**

(73) Proprietor : **KUREHA KAGAKU KOGYO KABUSHIKI KAISHA
9-11 Horidome-cho 1-chome Nihonbashi Chuo-ku
Tokyo 103 (JP)**

(72) Inventor : **Hisazumi,Nobuyuki
11-14 Higashi-Manabe-machi Tsuchiura-shi Ibaraki-ken (JP)**
Inventor : **Kahara, Keisuke
18-1 Umenobo Joban-Shimoyunagaya-machi Iwaki-shi Fukushima-ken (JP)**
Inventor : **Matsukura, Yoshihiro
1-1-15 Nakaoka-machi
Iwaki-shi Fukushima-ken (JP)**

(74) Representative : **Lawrence, Peter Robin Broughton et al
GILL JENNINGS & EVERY, Broadgate House,
7 Eldon Street
London EC2M 7LH (GB)**

EP 0 248 585 B2

## Description

The present invention relates to a process for producing a biaxally-stretched laminate film comprising a core layer of a copolymer of vinylidene chloride, two surface layers of polyamide and layers of an adhesive between each of the two surface layers and the core layer.

Meat products such as hams and sausages may be shrink wrapped prior to marketing. The shrink wrapping may be effected by filling the product into a heat-shrinkable thermoplastic casing and then subjecting the package to heat treatment for a few minutes to a few hours at a temperature generally in the range 70 to 95°C.

The shrink wrapping should meet the following important requirements:

It should be sufficiently impermeable to gaseous oxygen to prevent spoiling of the product during distribution. It should adhere sufficiently firmly to the product and, in particular, it should adhere sufficiently tightly that meat juice or jelly does not accumulate between the wrapping and the product. It should not acquire a wrinkled or pleated appearance, since this gives the impression that the product is stale.

The casing is generally tubular and is usually subjected to pressure (typically 0.2 to 0.5kg/cm$^2$ G) during filling and the casing should not be ruptured or deformed by this pressure. Also the casing should have sufficient flexibility that no pin holes are formed at the time of filling or subsequently. The casing is again subjected to pressure during the heat treatment, due to expansion of the product, and so the casing should have anti-creep properties at high temperature. For instance, it is required that the casing is not deformed by the stress of at least 0.2 to 0.3 kg/mm$^2$ at the time of heat-treatment at a temperature of 70 to 95°C.

Polyamide casings comprising a monolayer of homopolyamide (nylon 11 or 12) or a coextruded two layer casing of an inner layer of homopolyamide and an outer layer of nylon 6 tend to be deformed by the filling pressure and they wrinkle significantly during cooling after the heat treatment. Deformation and wrinkling is minimised in the heat-shrinkable casings comprising polyamide or a mixture of polyamide and polyolefin as described in Japanese Kokai 55-74744/1980. However such cases do not have sufficient impermeability to gaseous oxygen and water vapour and so the storage life of the product is short. Casings of polyethylene terephthalate or other thermo plastic polyester suffer from the same disadvantage and also do not adhere sufficiently tightly to the product.

Casings comprising a copolymer of vinylidene chloride are already widely used and give a good barrier to gaseous oxygen and water vapour. However they do not adhere tightly to the product and large casings of this type can be deformed under their own weight, especially during heat treatment, and have inadequate anti-creep properties at high temperature. Also pin holing is likely to occur during filling.

A heat-shrinkable laminate film comprising a copolymer of vinylidene chloride and a polyolefin and/or a polyamide has been proposed in Japanese Patent Applications Laid-Open (KOKAI) Nos. 59-79753/1984 (EP-A-0 107.854 and 59-174350/1984 and U.S. Patent No. 4,112,181.

However, the films disclosed in Japanese Patent Applications Laid-Open (KOKAI) Nos. 59-79753/1984 and 59-174350/1984 tend to curl and have inadequate dimensional stability. They easily generate undesirable deformation such as delayed recovery and creep in warm water. The laminate films disclosed in U.S. Patent No. 4.112,181 tend to delaminate since the adhesion between layers is weak.

Adhesives that are intended to adhere firmly a polyamide layer to a vinylidene chloride surface layer are known. Thus a copolymer of ethylene and vinyl acetate and a copolymer of ethylene and acrylic acid is known from Japanese Patent Application Laid-Open (KOKAI) No. 49-41476/1974 and a mixture of a copolymer of ethylene and a vinyl acetate and a copolymer of ethylene and ethyl acrylate is known from Japanese Patent Application Laid-Open (KOKAI) No. 51-119075/1976.

However known adhesives have not proved satisfactory for producing a heat-shrinkable film by biaxial stretching of a coextruded laminate. This is because excellent adhesion is necessary to prevent peeling at the time of stretching and because the adhesives must resist a wide range of temperatures.

A biaxially stretched polyamide film (either a single layer or a laminate) is usually made by extrusion from a T-die in plate form followed by biaxial stretching by a tender system. However film for shrink wrapping of meat products is generally extruded in tubular form and is generally stretched by an inflation system. When the film is of polyamide such a large stretching force is required during industrial manufacture that the resultant film is liable to be of non-uniform thickness. Also when the film is a laminate the adhesion between the layers tends to be inadequate.

The present invention is based on the discovery that it is possible to make a heat-shrinkable laminate film which has excellent physical properties when the film comprises a core layer of a copolymer of vinylidene chloride, two surface layers of a polyamide and an adhesive layer between each one of the surface layers and the core layer. The laminate is best made by coextrusion followed by biaxial stretching under certain conditions. The adhesive is a modified copolymer obtained by grafting a copolymer of ethylene and a vinyl carboxylate or an acrylic ester with an ethylenically unsaturated carboxylic acid or an acid anhydride thereof, or a polymeric

EP 0 248 585 B2

material obtained by neutralizing the modified copolymer with a metallic compound, or a thermoplastic polyurethane.

By the invention it is possible to make a film that has good impermeability to oxygen and water vapour, resists creep at high temperature and in warm water, has good resistance to pin holing and curl, adheres tightly to the product that is wrapped in it, does not peel and has an anti-delayed recovery property.

A process according to the present invention for making a biaxially stretched heat shrinkable laminate film which comprises a core layer of a copolymer of vinylidene chloride, two surface layers of polyamide and an adhesive layer between each one of the surface layers and the core layer and the film has a rate of shrinkability of not less than 10% both lengthwise and breadthwise after keeping the film 3 seconds in an atmosphere of 90°C, a rate of delayed recovery at room temperature of not more than 2%, and a rate of creep of not more than 20% after immersing the film for 10 seconds in warm water at 80°C under of load of 1 kg/mm$^2$, and the adhesive is a modified copolymer obtained by grafting a copolymer of ethylene and a vinyl carboxylate or an acrylic ester with an ethylenically unsaturated carboxylic acid or an acid anhydride thereof, or a polymeric material obtained by neutralizing the modified copolymer with a metallic compound, or a thermoplastic polyurethane, comprises coextruding the core layer, the surface layers of polyamide and the intermediate layers of adhesive, cooling the coextruded film rapidly to a temperature that is below, but not more than 30°C below, the second order transition point of the polyamide surface layers, or of the polyamide surface layer having the lower second order transition point, and converting the layer of vinylidene chloride copolymer to an amorphous state, biaxially stretching the film at a temperature of 60 to 100°C while both surface layers of polyamide contain 1 to 5% by weight water, and heat treating the stretched film for more than two seconds at 70 to 100°C while the outer surface layer of polyamide contains 2 to 7% water thereby shrinking the film by from 1 to 15% both lengthwise and breadthwise.

The copolymer of vinylidene chloride is a copolymer mainly composed of vinylidene chloride and preferably is a copolymer of 65 to 95% by weight of vinylidene chloride and 35 to 5% by weight of at least one comonomer which is copolymerizable with vinylidene chloride. Suitable comonomers are vinyl chloride, acrylonitrile, acrylic acid, methacrylic acid and $C_{1-18}$ alkyl esters of acrylic acid or methacrylic acid.

When the amount of vinylidene chloride is less than 65% by weight, the copolymer is rubber-like at ordinary temperature and it is impossible to obtain any moulded product of a stable form and when the amount of vinylidene chloride is more than 95% by weight, the melting point of the copolymer is too high and the copolymer is apt to be thermally decomposed. Accordingly, it is difficult to carry out a stable melt extrusion.

The copolymer of vinylidene chloride may contain conventional additives such as a small amount of plasticizers or stabilizer. Representative plasticizers or stabilizers include dioctyl sebacate, dibutyl sebacate, acetyltributyl citrate or epoxidized soy bean oil.

The layer of the copolymer of vinylidene chloride of the present invention preferably has a thickness of 3 to 30 μm. When the thickness is less than 3 μm, permeability to gaseous oxygen and water vapor may increase. If the thickness is over 30 μm, it is difficult to prevent the generation of pinholes and cracks due to low temperature fragility even though it is protected by biaxially stretched polyamide surface layers.

Suitable polyamides are Nylon-6, Nylon-7, Nylon-8, Nylon-10, Nylon-11, Nylon-12, Nylon 6-6, Nylon 6-10, Nylon 6-12, Nylon 6-66 and mixture thereof and copolymers of monomers used for forming such polymers. The polyamide can be blended with up to 50% by weight of a polymer of the ethylene series such as polyethylene, an ionomer, etc. or a polymer of vinyl alcohol series such as a saponified copolymer or ethylene and vinyl acetate, in an amount.

From the view point of both the processability in coextrusion of melt-piling within the die and the operability in the step of stretching, the melt viscosity of the polyamide, measured with KOKA-type flow tester, is preferably $5 \times 10^4$ to $50 \times 10^4$ (most preferably $10 \times 10^4$ to $20 \times 10^4$) Pa.s [$5 \times 10^3$ to $50 \times 10^3$ (most preferably $10 \times 10^3$ to $20 \times 10^3$) poise] under a shearing speed of 100 s$^{-1}$ at the same temperature as the extrusion temperature.

A large stretching force is necessary during the biaxially stretching and the laminate film itself must bear the stress during the stretching. Also, it is necessary for the laminate film to resist the pressure applied during the filling of the casing and to maintain an anti-creep property during the heat temperature (a few minutes to a few hours at 70 to 95°C). As a result it is preferable for the thickness of the polyamide layer to be 5 to 50 μm, more preferably 10 to 40 μm.

The polyamide inner layer has oil-resistance and is resistant to swelling by fats contained in foodstuffs and it adheres closely and firmly to the contents such as hams and sausages. The outer layer is usually formed of the same polyamide but can be different.

The adhesive must prevent delamination of the coextruded laminate during the stretching, and should be heat-resistance under the heat-treatment conditions (a few minutes to a few hours, at 70 to 95°C) to prevent the peeling off during the treatment.

In the manufacture of the copolymer adhesives, comonomers that can be copolymerized with ethylene, include vinyl acetate or vinyl propionate or $C_1$ - $C_8$ alkyl acrylate.

The copolymer is acid-modified with an ethylenically unsaturated carboxylic acid, such as acrylic acid, methacrylic acid, maleic acid, fumaric acid, etc. or its anhydride, such as maleic anhydride, etc. "Acid-modification" herein described means a step of introducing the unsaturated carboxylic acid into the copolymer by a graft polymerization reaction, etc.

The acid-modified polymer can be metal modified with a metallic compound, preferably a salt of an alkali metal, an oxide of an alkali metal, a salt of an alkaline earth metal or an oxide of an alkaline earth metal, is used. "Metal-modification" herein described means a step of introducing the metal into the polymer by neutralization reaction, etc.

The amount of the unsaturated carboxylic acid in the acid-modified copolymer is preferably 0.01 to 10% by weight, and the amount of the metal-modified polymer is preferably 0.02 to 10 mol% to the acid group therein.

Thermoplastic polyurethane adhesives that can be used include linear polyurethane elastomers which can be processed by an ordinary plastic moulding method. The polyurethane is preferably obtained by reacting an organic diisocyanate and a linear compound containing hydroxyl group(s), such as dihydroxy (polyethylene adipate), dihydroxy (polybutylene adipate), dihydroxy (polyhexamethylene adipate), polytetramethylene ether glycol, dihydroxypolycaprolactone and an organic diisocyanate, by known methods. As a molecular chain-extending agent, 1,4-butylene glycol, paraxylene glycol, bis ($\beta$-hydroxyethoxy)-benzene, etc. can be used. Suitable organic diisocyanates include diphenylmethane 4,4'-diisocyanate, 1,6-hexamethylene diisocyanate and toluylene diisocyanate. Suitable thermoplastic polyurethanes are available under the registered trade name of PARAPLENE.

The thickness of the adhesive layer is from 1 $\mu$m to less than 5 $\mu$m and preferably 1.5 to 4 $\mu$m. If the thickness is below 1 $\mu$m, the adhesion is likely to be inadequate.

As the heat-shrinkable laminate film made by the process of the present invention is a biaxially stretched laminate film, heating of the film after filling the contents into the film causes shrinking of the film and it is possible to arrange that film closely adheres to the meat product or other foodstuff which has been filled into the casing, without exhibiting any wrinkled and pleated appearance.

The rate of shrinkability of the heat-shrinkable laminate film made by the process according to the present invention, when the film is heated for 3 seconds at 90°C in a relaxed state, it not less than 10% both lengthwise (L) and breadthwise (T) and the rate of delayed recovery thereof at room temperature is not more than 2%, preferably not more than 1% both in L direction and T direction. The rate of creep of the film is not more than 20%, preferably not more than 15% after immersing the film 10 seconds into a warm water of 80°C with a load of 1 kg/mm$^2$.

The heat-shrinkable film for packaging the food products, particularly for filling and/or packaging hams, sausages, etc. is preferably extruded in a tubular form and the extruded tubular film is stretched generally by the inflation system. Because a large stretching force is necessary it would have been very difficult to obtain a film of uniform thickness if it was made only from polyamide, but the laminate of the invention can have extremely small variations in thickness.

In the preferred extrusion method, three sets or four sets of extruders are used and the copolymer of the core layer, the same or different polyamides of the two surface layers and the adhesive of the adhesive layer between each of the two surface layers and the core layer are molten and laminated, and then coextruded in a tubular form.

The coextruded tubular film is rapidly cooled to a temperature of not higher than the second order transition temperature of the polyamide (or the lower one if there are two polyamides) and not lower than that transition temperature by 30°C, thereby keeping the copolymer of vinylidene chloride in an amorphous state. Water may then be enclosed in the tubular film and the tubular is kept for 2 to 10 seconds as it is, so as to include water into the inner polyamide layer. An aqueous suspension, e.g. of talc, may be enclosed in the film instead of using water alone. Thereafter, the treated tubular film may be immersed for 2 to 10 seconds, preferably for 3 to 4 seconds, in warm water of 60 to 100°C, preferably 70 to 90°C so as to include water in the outer polyamide layer. The water absorbed by the polyamide surface layers is preferably 1 to 5% by weight, most preferably 2 to 3% by weight.

Then the treated tubular film may be biaxially stretched by an inflation system with enclosed air 1.5 to 4 times (preferably 2 to 3.5 times) lengthwise and 1.5 to 5 times (preferably 3 to 4 times) breadthwise at a temperature of 60 to 100°C.

If the amount of absorbed water in at least one polyamide layer is less than 1% by weight, the biaxially stretched laminate film becomes highly curled and the rate of delayed recovery and also the rate of creep thereof are large, resulting in a poor dimensional stability. If the amount is over 5% by weight, the effect of orientation becomes poor and it is impossible to obtain a heat-shrinkable laminate film having the desired properties.

In the next step, air is again enclosed within the stretched tubular film and the tubular film is subjected to heat-treatment for not shorter than 2 seconds, preferable not shorter than 5 seconds, at a temperature of 70 to 100°C. This is conducted while spraying steam or hot water onto the outside of the tubular film in order to make the polyamide of the outer surface layer absorb water in an amount of 2 to 7% by weight, preferably 5 to 5% by weight. This step makes the film shrink 1 to 15%, preferably 2 to 10%, both lengthwise and breadthwise.

When the shrinkage by the heat-treatment is not given, it is difficult to retain the rate of creep of the product not more than 20% in warm water. Further, when the heat-treatment was conducted in the conditions outside the condition set forth above, it is impossible to obtain the heat-shrinkable laminate film according to the present invention, because the undesirable deformations such as curls, delayed recovery, creep in warm water, etc. become larger.

In the attached drawing, Figure 1 shows the layout of the process for producing a heat-shrinkable laminate film according to the present invention and 1 is a circular die, 2 is a shower ring, 3, 4, 5, 7, 8, 9 and 10 are pinch rolls, 6 is a water bath, 11 is an extruder, 21, 22 and 23 are films and 24 is a winding roll.

In Figure 1, the tubular five-layered film (21) extruded by an extruder (11) (although three or four extruders are used, only one extruder is shown) through a circular die (1) is rapidly cooled to a temperature of not higher than the lower second order transition point of the polyamides and of not lower than 30°C than the transition point, by spraying water of a temperature of 10 to 50°C, preferably 20 to 30°C, to the tubular film from the shower ring (2) which is installed just after the lip of the circular die (1) and then is drawn by the pinch rolls (3).

Then, water or an aqueous suspension of talc, is enclosed within the tubular film between a pair of pinch rolls (4 and 5) and the treated tubular film is immersed in a water bath (6), thereby making the polyamides of the two surface layers absorb water. The tubular film which absorbed water is biaxially stretched by the enclosed air between a pair of pinch rolls (7 and 8).

Air is again enclosed in the treated tubular film between the succeeding pair of the pinch rolls (9 and 10), and steam or hot water is sprayed to the tubular film, thereby carrying out the heat-treatment while making the polyamide of the outermost layer absorb water. At this time, it is preferable to make the speed of the pinch rolls of the take-in side (10) slower than the speed of the pinch rolls of the send-off side (9) by 1 to 3%, and it is preferable to adjust the pressure of the enclosed air so that the folded width of the film is reduced 5 to 15% before and after the heat-treatment.

The heat-treated film is wound around the winding roll (24) to obtain the heat-shrinkable laminate film according to the present invention.

The present invention will be explained more in detail while referring to the following limitative Examples.

EXAMPLE 1:

A copolymer compound (A) and the two polymers (B and C) were respectively and separately extruded by three extruders and the extruded polymer (B and C) were each branched into two conduits. The extruded molten polymers were supplied into a circular die to form a tubular melt-laminate in the order of C/B/A/B/C from the inner layer to the outer layer.

Copolymer compound (A):

100 parts by weight of a copolymer of vinylidene chloride and vinyl chloride (83/17 by weight)

1 part by weight of dibutyl sebacade and

2 parts by weight of epoxidized soy bean oil.

Polymer (B):

A polymer obtained by grafting maleic anhydride to a copolymer of ethylene and ethyl acrylate (content of ethyl acrylate being 15% by weight) was modified with $MgCO_3$. Melt index of Polymer (B) was 6 g/10 min. The amount of maleic anhydride in the grafting polymer was 0.5% by weight and the amount of Mg in Polymer (B) was 0.4% by weight.

Polymer (C):

A polyamide, Nylon 6-66, made by TORAY Co., Ltd. under the symbol of CM-6041 X., melting point of 200°C, crystallization temperature of 150°C, second order transition point of 46°C and melt viscosity of $1.7 \times 10^4$ poise at 220°C. Temperature of the resin of the molten tubular film at the outlet of the circular die was 230°C.

The extruded tubular film was rapidly cooled by spraying water at 20°C from the shower ring (2) to the outside of the molten tubular film and the cooled tubular film was folded by pinch rolls (3) to form a tubular film of folded width 33 mm and thickness 450 μm.

Thereafter, about 200ml of an aqueous 35% suspension of talc was enclosed in the tubular film between a pair of pinch rolls (4 and 5), and the treated tubular film was heated for 3 seconds in a water bath (6) at 80°C to make the two polyamide layers absorb water.

The tubular film was then biaxially stretched by air pressure between a pair of pinch rolls (7 and 8) to give stretching of 3 times lengthwise and 3.4 times breadthwise. During the stretching step, the polyamide of both the inner and outer surface layers contains about 2% by weight of water.

After enclosing air in the biaxially stretched film between a pair of pinch rolls (9 and 10), the film was subjected to heat-treatment for 5 seconds by heating with steam from outside of the tube at 98°C. At this point, the rate of water absorption by the polyamide of outer surface layer was 4.5%. The speed of the pinch rolls (10) on the take-in side was slower than the speed of the pinch rolls (9) on the send-off side by 2%, and the pressure of enclosed air was adjusted so that the folded width of heat treated tubular film was reduced by 9% before and after the heat-treatment.

After the heat-treatment, the biaxially stretched five-layered film was wound up by an ordinary method.

The obtained biaxially stretched five-layered film had a folded width of 102 mm and thicknesses as follows. From the inner surface layer side, C layer = 10 $\mu$m, B layer = 3.5 $\mu$m, A layer = 8 $\mu$m, B layer = 3.5 $\mu$m and C layer = 20 $\mu$m. The total thickness of the film was 45 $\mu$m.

On the film obtained in Example 1 and the packaged casing cripped both end, each of the properties of the film was measured by the respective methods shown below and the results are shown in the Table.

The rate of shrinkability is determined by cutting 20 pieces each 10cm x 10cm from the wound film and heating each for 3 seconds at 90°C in the relaxed state. The average rate of shrinking of the pieces to the original length in the direction of winding and in the transverse direction are the rates of shrinkability.

Interlayer adhesion between the polyamide and vinylidene chloride copolymer layers in ode-paper-like pieces 20mm wide of the composite film is measured by the T (180°C) peeling-off method using a Tensilon tester (trade mark for a Tensile tester made by Toyo Seiki Co.).

The barrier property to gaseous oxygen is the amount of gaseous oxygen that permeates through film at 30°C at RH 100%.

The barrier property to water vapor is the amount of water vapor that permeates through the film at 40°C and RH 95%.

The cold resistance, number of pinholes, is recorded by compressing a 10m length of the film to a length of 1m while causing wrinkles in the film at 5°C, one end of the film is tightly sealed and air at 0.3kg/cm² G is blown into the tubular casing to resore the original length. Thereafter the treated film is immersed into water at ordinary temperature and the number of pinholes measured.

The rate of creep is measured by immersing into warm water at 80°C for 10 seconds an ode-paper-like piece of the film 20mm wide while hanging a load corresponding to 1kg/mm² from the piece. After rapidly cooling the piece of film the load is removed and the rate of elongation of the piece to its original length in the direction of winding and in the transverse direction (as a percentage), is the rate of creep.

The rate of delayed recovery is measured by unwinding about 1m of the film from its initial roll form and accurately measuring the length and width of the unwound piece. This piece is hung for a week in a room at 25°C and RH 65% with one end of the piece fixed, and the length and width are then accurately measured again. The rate of change of the length and width is recorded.

The degree of curl is measured by cutting off one end of tubular film by a cutter, leaving the cut off piece in a room at 25°C and RH 65% for one hour, taking the piece out of the room and measuring the number of complete curls of the piece with the naked eye. The result is represented by an angle.

The degree of close adhesion of the film to meet packed in the film is recorded on a scale of 0 to 8 where 0 indicates significant accumulation of liquid between the film and the meat, 4 indicates that 25% of the area of the film is adhered to the meet, 7 indicates that almost all in the area of the film is adhered to the meet and 8 indicates that the whole surface area is adhered to the meat and a large amount of meat remains on the film when the film is peeled off.

The appearance of the packaged product is determined by filling 6kg of sausage meat into film casing having a folded width of 230mm by a conventional method and subjecting the product to heat treatment for 2 hours at 80°C while hanging. The packaged product is preserved for 1 day in a refrigerator at 5°C and the extent of the wrinkles on the outer surface of the film casing, and the extent of the change of the outer diameter of the film casing are observed. G indicates that there are no wrinkles and no change of the outer diameter on the top, middle and bottom of the sausage. H would indicate that wrinkles are observed partly in the shoulder part and the change of the outer diameter on the top, middle and bottom of the sausage is observed. B indicates significant formation of wrinkles and change of outer diameter on the top, middle and bottom of the sausage.

EXAMPLE 2:

In the same manner as in Example 1 except for changing the adhesive of the second and fourth layers into a thermoplastic polyurethane (D), a biaxially stretched five-layered film was produced. The properties of the obtained film were measured by the same methods as in Example 1 and the results are shown in Table.

Polymer (D):

Thermoplastic polyurethane elastomer (of a series of adipate polyester), made by NIPPON ELASTORAN Co., Ltd. under the trade name of PARAPREN [R] P22S.

Softening point: 105°C

Density: 1.21 g/cm$^3$.

EXAMPLE 3:

In the same manner as in Example 1 except for changing Nylon 6-66 as the polyamide of the first layer in Example 1 to the following Nylon 6-12 (E) and using four extruders instead of three, a biaxially stretched five-layered film was produced. The properties of the obtained film were measured by the same methods as in Example 1, and the results are shown also in Table.

Polymer (E):

Nylon 6-12, made by Emus Co., Ltd. under the symbol of CAE6 Melting point: 125.7°C

Second order transition point: 27°C

Melt viscosity: 2.0 x 10$^4$ poise (160°C).

COMPARATIVE EXAMPLE !:

In the same manner as in Example 1 except for changing the polymer of the fifth layer to the following polymer (F), not enclosing the aqueous suspension of talc between the pair of pinch rolls (4 and 5), biaxially stretching the film in a water bath of 75°C and winding up the stretched film without carrying out the heat-treatment, a biaxially stretched five-layered film was produced. The properties of the obtained film were measured by the same methods as in Example 1, and the results are also shown in Table.

Polymer (F):

Low density polyethylene

Melt index : 1.22 g/10 min.

Density : 0.92 g/cm$^3$

In this case, the curl of the cut end of the film was remarkable, and the change of dimensions of the film occurred before filling meat into the film. Such a change of dimensions of the film became the cause of dimensional irregularity of the crip-packaged products.

Furthermore, wrinkles and changes of the external form occurred on the film.

Each of the laminate films according to the present invention obtained in Example 1 to 3 was clearly superior to the film obtained in Comparative Example 1.

COMPARATIVE EXAMPLES 2 AND 3:

As Comparative Examples, the properties of the commerciallized and representative mono-layered film casing are also shown in Table. There was signification weight loss from the contents of comparative film 3.

The results shown in the following table clearly demonstrate the superiority of the film according to the invention as a film for packaging foodstuffs.

Table

| | | Example | | | Comparative Example | | |
|---|---|---|---|---|---|---|---|
| | | 1 | 2 | 3 | 1 | 2 | 3 |
| Construction of each layer (thickness in micrometers) | First layer | C (10) | C (10) | E (10) | C (20) | Single layer of Polymer A (40) | Single layer of Nylon 6 (55) |
| | Second layer | B (3.5) | D (3.5) | B (3.5) | B (3.5) | | |
| | Third layer | A (8) | A (8) | A (8) | A (8) | | |
| | Fourth layer | B (3.5) | D (3.5) | B (3.5) | B (3.5) | | |
| | Fifth layer | C (20) | C (20) | C (20) | F (10) | | |
| Temperature of water bath (°C) | | 80 | 80 | 80 | 75 | | |
| Stretchability | | Good | Good | Good | Good | – | – |
| Inter-layer adhesion (g/20 mm) | | 850 | 800 | 850 | 800 | – | – |
| Rate of shrinkability (%) L/T | | 15/12 | 16/11 | 17/15 | 23/20 | 20/15 | 13/10 |
| Barrier property to gaseous oxygen ($cc/m^2$.day.atm) | | 40 | 40 | 40 | 50 | 35 | 70 |
| Barrier property to water vapor ($g/m^2$. day) | | 8 | 8 | 8 | 6 | 8 | 50 |
| Cold-resistance, number of pinholes | | 0 | 0 | 0 | 0 | 4 | 0 |
| Rate of creep (%), L/T | | 12/9 | 12/9 | 13/10 | 25/18 | 28/20 | 7/5 |
| Rate of delayed recovery (%), L/T | | 0.5/0.5 | 1.0/1.0 | 0.5/0.5 | 7.0/7.0 | 4.0/4.0 | 0.5/0.5 |
| Degree of curl (°) | | 10 | 10 | 10 | 360 | 10 | 0 |
| Degree of close adhesion of film to meat | | 7 | 7 | 7 | 7 | 4 | 7 |
| Appearance of the packaged product | | G | G | G | B | B | B |

## Claims

1. A process for making a biaxially-stretched heat-shrinkable laminate film which comprises a core layer of a copolymer of vinylidene chloride, two surface layers of a polyamide and an adhesive layer between each of the surface layers and the core layer, which film has a rate of shrinkability of not less than 10% both lengthwise and breadthwise after keeping the film 3 seconds in an atmosphere of 90°C, a rate of delayed recovery at room temperature of not more than 2%, and a rate of creep of not more than 20% after immersing the film for 10 seconds in warm water at 80°C under a load of 1 kg/mm² and in which the adhesive is a modified copolymer obtained by grafting a copolymer of ethylene and a vinyl carboxylate or an acrylic ester with an ethylenically unsaturated carboxylic acid or an acid anhydride thereof, a polymeric material obtained by neutralizing the modified copolymer with a metallic compound, or a thermoplastic polyurethane comprising melt coextrusion of the core layer, the surface layers and the adhesive layers, cooling the coextruded film rapidly to a temperature that is below, but not more than 30°C below, the second order transition point of the polyamide surface layers or of the polyamide surface layer hang the lower second order transition point, making the layer of the vinylidene chloride copolymer amorphous, biaxially stretching the film at a temperature of 60 to 100°C while both surface layers of polyamide contain 1 to 5% water, and heat treating the stretched film for more than two seconds at 70 to 100°C while the outer surface layer of polyamide contains 2 to 7% water and thereby shrinking the film 1 to 15% both lengthwise and breadthwise.

2. A process according to claim 1, wherein the thickness of the core layer is 3 to 30 μm, the thickness of each of the two surface layers is 5 to 50 μm and the thickness of each adhesive layer is 1 to 5 μm.

3. A process according to either preceding claim in which the vinylidene chloride copolymer is a copolymer of 65 to 95% by weight vinylidene chloride and 5 to 35% by weight of a comonomer, preferably vinyl chloride, acrylonitrile, (meth) acrylic acid or $C_{1-18}$ alkyl ester of (meth) acrylic acid.

4. A process according to any preceding claim in which the adhesive is a graft copolymer of an ethylenically unsaturated carboxylic acid or anhydride with a copolymer of ethylene with vinylacetate, vinylpropionate or $C_{1-8}$ alkyl (meth) acrylate, the amount of the unsaturated carboxylic acid or anhydride preferably being 0.01 to 10% by weight of the copolymer.

5. A process according to claim 4 in which the graft polymer has been reacted with an alkali or alkaline metal introduced as an oxide or salt, the amount of metal preferably being 0.02 to 10 mol% of the acid groups in the polymer.

6. A process according to any preceding claim in which the biaxial stretching is carried out so hat the stretch ratio is from 1.5 to 4 times lengthwise and 1.5 to 5 times breadthwise.

7. A process according to any preceding claim in which the film is coextruded as a tube and the biaxial stretching is by air inflation.


## Patentansprüche

1. Verfahren zur Herstellung einer biaxial gedehnten, wärmeschrumpfbaren Laminatfolie, welche eine Kernschichte aus einem Vinylidenchlorid-Copolymer, zwei Deckschichten aus einem Polyamid und eine Klebeschichte zwischen jeder der Deckschichten und der Kernschichte umfaßt, welche Folie sowohl in Längs- als auch in Querrichtung eine Schrumpfungsrate von nicht weniger als 10%, nachdem die Folie 3 s in einer 90°C warmen Atmosphäre gehalten wurde, eine Rate der verzögerten Wiederherstellung bei Raumtemperatur von nicht mehr als 2% und eine Kriechrate von nicht mehr als 20%, nachdem die Folie 10 s in 80°C warmen Wasser unter einer Beladung von 1 kg/mm² eingeweicht wurde, aufweist, und bei welcher der Klebstoff ein modifiziertes Copolymer, welches durch Pfropfen eines Copolymers aus Ethylen und einem Vinylcarboxylat oder einem Acrylester mit einer ethylenisch ungesättigten Carbonsäure oder einem Säureanhydrid davon erhalten wird, ein durch Neutralisieren des modifizierten Copolymers mit einer metallischen Verbindung erhaltenes Polymermaterial oder ein thermoplastisches Polyurethan ist, welches eine Schmelzcoextrusion der Kernschichte, der Deckschichten und der Klebeschichten, ein schnelles Abkühlen der coextrudierten Folie auf eine Temperatur, welche unter, jedoch nicht mehr als 30°C unter dem Umwandlungspunkt zweiter Ordnung der Polyamiddeckschichten oder der Polyamiddeckschichte, welche den niedrigeren Umwandlungspunkt zweiter Ordnung aufweist, liegt, ein Amorphmachen der Schicht des Vinylidenchlorid-Copolymers, ein biaxiales Dehnen der Folie bei einer Temperatur von 60 bis 100°C, während beide Deckschichten 1 bis 5% Wasser enthalten, und eine Wärmebehandlung der gedehnten Folie für mehr als 2 s bei 70 bis 100°C, während die Polyamiddeckschichte 2 bis 7% Wasser enthält, und hiebei das Schrumpfen der Folie in sowohl Längs- als auch Querrichtung von 1 bis 15% umfaßt.

2. Verfahren nach Anspruch 1, worin die Dicke der Kernschichte 3 bis 30 μm beträgt, die Dicke jeder der zwei Deckschichten 5 bis 50 μm ist und die Dicke jeder Klebeschichte 1 bis 5 μm beträgt.

3. Verfahren nach einem der vorhergehenden Ansprüche, in welchem das Vinylidenchlorid-Copolymer ein Copolymer aus 65 bis 95 Gew.-% Vinylidenchlorid und 5 bis 35 Gew.-% eines Comonomers, vorzugsweise Vinylchlorid, Acrylnitril, (Meth)acrylsäure oder ein $C_{1-18}$ Alkylester der (Meth)acrylsäure ist.

4. Verfahren nach einem der vorhergehenden Ansprüche, in welchem der Kleber ein Pfropfcopolymer einer ethylenisch ungesättigten Carbonsäure oder eines Anhydrids mit einem Copolymer aus Ethylen mit Vinylacetat, Vinylpropionat oder $C_{1-8}$ Alkyl(meth)acrylat ist, wobei die Menge der ungesättigten Carbonsäure oder des Anhydrids vorzugsweise 0,01 bis 10 Gew.-% des Copolymers beträgt.

5. Verfahren nach Anspruch 4, in welchem das Pfropfpolymer mit einem Alkali- oder Erdalkalimetall, welches als Salz oder Oxid eingesetzt wurde, umgesetzt wurde, wobei die Metallmenge vorzugsweise 0,02 bis 10 Mol% der Säuregruppen in dem Polymer beträgt.

6. Verfahren nach einem der vorhergehenden Ansprüche, worin das biaxiale Dehnen so durchgeführt wird, daß die Dehnungsrate im Bereich von 1,5 bis 4 in Längsrichtung und im Bereich von 1,5 bis 5 in Querrichtung liegt.

7. Verfahren nach einem der vorhergehenden Ansprüche, in welchem die Folie als Schlauch coextrudiert wird und das biaxiale Dehnen durch Aufblasen mit Luft erreicht wird.

## Revendications

1. Procédé de fabrication d'une pellicule stratifiée rétractable à chaud et étirée biaxialement, qui comprend une couche centrale d'un copolymère de chlorure de vinylidène, deux couches superficielles d'un polyamide et une couche adhésive entre chacune des couches superficielles et la couche centrale, la pellicule ayant un taux de rétractabilité d'au moins 10% à la fois dans le sens de la longueur et dans le sens de la largeur après maintien de la pellicule pendant 3 secondes dans une atmosphère à 90°C, un taux de récupération retardée à la température ambiante ne dépassant pas 2%, et un taux de fluage ne dépassant pas 20% après 10 secondes d'immersion de la pellicule dans de l'eau chaude à 80°C sous une charge de 1 kg/mm$^2$ et dans laquelle l'adhésif est un copolymère modifié obtenu par greffe d'un copolymère d'éthylène et d'un carboxylate vinylique ou d'un ester acrylique avec un acide ou un anhydride carboxylique insaturé éthyléniquement, une matière polymère obtenue par neutralisation du copolymère modifié avec un composé métallique, ou un polyuréthane thermoplastique, comprenant les pas suivants: coextrusion à l'état fondu de la couche centrale, des couches superficielles et des couches adhésives, refroidissement rapide de la pellicule coextrudée à une température qui est inférieure, mais pas inférieure de plus de 30°C, au point de transition de second ordre des couches superficielles de polyamide ou de la couche superficielle de polyamide ayant le point de transition du second ordre inférieure, rendement amorphe de la couche de copolymère de chlorure de vinylidène, étirage biaxiale de la pellicule à une température de 60 à 100°C alors que les deux couches superficielles de polyamide contiennent 1 à 5% d'eau, et traitement à chaud de la pellicule étirée pendant plus de deux secondes de 70 à 100°C alors que la couche superficielle exterieure de polyamide contient 2 à 7% d'eau, si bien que la pellicule soit rétractée de 1 à 15% à la fois dans le sens de la longueur et dans le sens de la largeur.

2. Procédé suivant la revendication 1, caractérisé en ce que l'épaisseur de la couche centrale est de 3 à 30 um, l'épaisseur de chacune des deux couches superficielles est de 5 à 50 um et l'épaisseur de chaque couche adhésive est de 1 à 5 um.

3. Procédé suivant l'une quelconque des revendications précédentes, caractérisé en ce que le copolymère de chlorure de vinylidène est un copolymère de 65 à 95% en poids de chlorure de vinylidène et de 5 à 35% en poids d'un comonomère, de préférence le chlorure de vinyle, l'acrylonitrile, l'acide (méth)acrylique ou un ester alkylique en $C_{1-18}$ de l'acide (méth)acrylique.

4. Procédé suivant l'une quelconque des revendications précédentes, caractérisé en ce que l'adhésif est un copolymère greffé d'un acide ou d'un anhydride carboxylique insaturé éthyléniquement avec un copolymère d'éthylène et d'acétate de vinyle, de propionate de vinyle ou d'un (méth)acrylate d'alkyle en $C_{1-8}$, la quantité de l'acide ou de l'anhydride carboxylique insaturé étant de préférence de 0,01 à 10% en poids du copolymère.

5. Procédé suivant la revendication 4, caractérisé en ce que le polymère greffé a été traité avec un métal alcalin ou alcalino-terreux introduit sous la forme d'un oxyde ou d'un sel, la quantité de métal étant de préférence de 0,02 à 10% en moles des groupes acides dans le polymère.

6. Procédé suivant l'une quelconque des revendications précédentes, caractérisé en ce que l'étirage biaxiale est effectué de telle sorte que le rapport d'étirage est de 1,5 à 4 fois dans le sens de la longueur et de 1,5 à 5 fois dans le sens de la largeur.

7. Procédé suivant l'une quelconque des revendications précédentes, caractérisé en ce que la pellicule est coextrudée sous la forme d'un tube et que l'étirage biaxial est effectué par gonflement avec de l'air.